# EUROPÄISCHE PATENTSCHRIFT

(11) **EP 1 642 458 B1**
(45) Veröffentlichungstag und Bekanntmachung des Hinweises auf die Patenterteilung: **19.01.2011**
(21) Anmeldenummer: 04740663.2
(22) Anmeldetag: 05.07.2004
(51) Int. Cl.: H04N 7/167, H04N 7/173

(54) **VERFAHREN UND VORRICHTUNG ZUM ÜBERMITTELN VON ENTSCHLÜSSELUNGSCODES FÜR FREI ÜBERTRAGENE, VERSCHLÜSSELTE PROGRAMMINHALTE AN EINDEUTIG IDENTIFIZIERBARE EMPFÄNGER**
METHOD AND DEVICE FOR TRANSMITTING DECRYPTION CODES OF FREELY TRANSMITTED, ENCRYPTED PROGRAM CONTENTS TO CLEARLY IDENTIFIABLE RECEIVERS
PROCEDE ET DISPOSITIF DE TRANSMISSION DE CODES DE DECRYPTAGE POUR DES CONTENUS DE PROGRAMME CRYPTES A TRANSMISSION LIBRE A DES DESTINATAIRES DEFINIS POUVANT ETRE IDENTIFIES

(30) Priorität: 03.07.2003 DE 10330089
(43) Veröffentlichungstag der Anmeldung: 05.04.2006
(73) Patentinhaber: BT (GERMANY) GMBH & CO. OHG, 80339 München (DE)
(72) Erfinder: ERNST, Matthias, 80999 München (DE); SPECHT, Jens, 85221 Dachau (DE)
(74) Vertreter: Wagner, Karl H.
(86) Internationale Anmeldenummer: PCT/EP2004/007332
(87) Internationale Veröffentlichungsnummer: WO 2005/004484

(56) Entgegenhaltungen:
- US-A- 4 763 191
- US-A- 4 807 023
- US-A- 4 890 322
- US-A- 5 537 292
- US-A- 5 592 551
- US-A- 5 794 115
- US-A1- 2003 030 751
- "FUNCTIONAL MODEL OF A CONDITIONAL ACCESS SYSTEM" EBU REVIEW- TECHNICAL, EUROPEAN BROADCASTING UNION. BRUSSELS, BE, Nr. 266, 21. Dezember 1995 (1995-12-21), Seiten 64-77, XP000559450 ISSN: 0251-0936

## Beschreibung

Die vorliegende Erfindung bezieht sich auf ein Verfahren und eine Vorrichtung zum Übermitteln von Entschlüsselungscodes für frei übertragene, verschlüsselte Programminhalte an eindeutig identifizierbare Empfänger.

Es ist bekannt, bestimmte Programminhalte, wie beispielsweise Pay-TV-Programme, in verschlüsselter Form auszustrahlen. Dabei werden die Programminhalte beispielsweise über Satelliten, Kabel oder sonstige Art und Weise ausgestrahlt. Bei dieser Form der freien Ausstrahlung können aufgrund der einseitigen Informationsübertragung bestimmte Personen, welche beispielsweise kein Entgelt für empfangene Dienste bezahlen, nicht vom Empfang der Programminhalte ausgeschlossen werden. Um dennoch eine Finanzierung dieser Programminhalte zu erreichen, werden sie in bekannter Weise verschlüsselt und dem Kunden werden beispielsweise Entschlüsselungscodes über Chipkarten verkauft, welche eine ordnungsgemäße Darstellung der Programminhalte vom Besitz einer gültigen Chipkarte abhängig machen.

Der Entschlüsselungscode derartiger Chipkarten kann jedoch - wie in der Vergangenheit geschehen - umgangen bzw. geknackt werden und somit nichtberechtigten Dritten, die keine Gebühren an den Anbieter der Programminhalte abführt, weitergegeben werden. Hierdurch wird die Finanzierung derartigen Programminhalte erschwert, da eine effektive Zugriffsbeschränkung auf frei ausgestrahlte Programminhalte nicht möglich ist.

Das heutzutage etablierte Verfahren für Pay-TV-Nutzer beinhaltet eine Registrierung der Teilnehmer und die Übergabe eines Codes zum Entschlüsseln der Programme an eine bestimmte Gruppe von registrierten Teilnehmern. Zum Abrufen der in der Regel entgeltpflichtigen Programminhalte benötigt der registrierte Teilnehmer spezielle Einrichtungen zum Empfang von Satelliten- und Breitbanddaten (Programmzugangscode und Programm) sowie eine Einheit zur Decodierung des Datenstroms, z.B. einen Dekoder mit Entschlüsselungseinheit. Ein entsprechender Entschlüsselungscode wird über eine Chipkarte zur Verfügung gestellt, welche die zuvor genannten Probleme mit sich bringt, insbesondere das Problem einer Übertragung des Entschlüsselungscodes auf nicht-registrierte und somit nicht-zahlende Nutzer. Darüber hinaus ist eine Veränderung der Verschlüsselung sehr aufwendig, da den jeweiligen registrierten Nutzern ein neuer Entschlüsselungscode über eine entsprechende Chipkarte zur Verfügung gestellt werden muss.

Neben der Chipkartenproblematik besteht weiterhin das Problem, dass die berechtigten Teilnehmer jeweils aufwendig registriert werden müssen, und sie im Allgemeinen monatlich mit einer Gebühr für die Nutzbarkeit der Programminhalte belastet werden, und zwar unabhängig von einer tatsächlichen Nutzung. Dies lässt noch viele potentielle Pay-TV-Kunden von einer tatsächlichen Teilnahme Abstand nehmen. Darüber hinaus ist ein Einstieg von weiteren Anbietern für Programminhalte in den Markt aufgrund dieser Zurückhaltung und den oben genannten Gründen sehr schwierig.

In der US 4 807 023 A ist ein Verfahren beschrieben, bei dem ein Kabel-TV Teilnehmer eine Anforderung für den Empfang nur eines ausgewählten Kabelprogramms über Telefon an einen Kabelanbieter sendet. Solch ein Verfahren ist unter dem Begriff "impulse pay per view", IPPV, bekannt. Der Teilnehmer stellt zur Nutzung des Systems seinen adressierbaren Kabel-TV Dekoder auf den gewünschten Kanal ein. Daraufhin benutzt er sein Telefon um den ANI (automatic number identification) Telefon-Code und weitere vier oder mehr Ziffern, von denen zwei das gewünschte IPPV Ereignis bezeichnen und die restlichen wahlweise eine Passwortnummer beinhalten, einzugeben.

In Erwiderung auf die ANI Übertragung sammelt und speichert die empfangende Telefonzentrale Daten. Daraufhin kommuniziert sie mit Hilfe des beschriebenen Systems mit der "angerufenen" Kabel-Kopfstation und beliefert diese mit verschiedenartiger Information, die die Telefonnummer der Kabelteilnehmer, die angerufen haben, die von den Benutzern eingegebenen Daten und verschiedene andere Information beinhaltet. Wenn das gespeicherte und das neu übertragene Passwort übereinstimmen, werden die Authorisierungs-Bits des Heimeinheit-Kontrollblocks ("home unit control block", HUCB) aktualisiert und der neue HUCB an den Konverter des Kabel-Teilnehmers versandt, wodurch der Konverter aktiviert wird, um dem Zuschauer das Betrachten des mit dem IPPV Anruf gewählten Programmes zu ermöglichen.

Für die Übertragung des HUCB wird die Telefonnummer des Anrufers durch das beschriebene System auf eine Adresse des einseitig Kabel-TV adressierbaren Konverters abgebildet. Der beschriebene System-Controller überträgt die nötigen Informationen zum Abrechnungs-Computer, um dem Kabel-Teilnehmer das IPPV Ereignis in Rechnung zu stellen.

Die US 4 890 322 A beschreibt ein Verfahren zur automatischen Bestellung eines von einem Teilnehmer gewünschten Programmsignals durch eine Teilnehmer-Einheit, die eine Bestell-Anweisung durch den Teilnehmer erhalten hat. Die Bestellung wird über eine Telefonverbindung abgewickelt. In Erwiderung der Bestellung empfängt die Teilnehmer-Einheit Schlüssel-Dekodier-Information ("key deciphering information") über dieselbe Telefonverbindung und speichert diese in einem Speicher. Das bestellte verschlüsselte Programmsignal trägt mit sich Hilfssignale, welche ein Kontrollsignal beinhalten, welches die Entschlüsselungs-Mittel in der Einheit aktiviert, die SchlüsselInformation zur Entschlüsselung des Signals für die Dauer des Programms zu benutzen. Die Kenntnis des Telefonanbieters der Telefonnummer des Teilnehmers erlaubt eine ordnungsgemäße Abrechnung ohne eine Notwendigkeit, die Teilnehmer-Einheit selbst zu identifizieren.

Ausgehend von dem oben genannten Verfahren liegt der vorliegenden Erfindung die Aufgabe zugrunde, eine hinsichtlich der Sicherheit verbesserte Vorrichtung und ein entsprechendes Verfahren zum Übermitteln von Entschlüsselungscodes für frei übertragene, verschlüsselte Programminhalte vorzusehen. Darüber hinaus soll der Zugang zu verschlüsselten Programminhalten und deren Abrechnung vereinfacht werden.

Die Erfindung sieht ein Verfahren gemäß den Ansprüchen 1 und 10, eine Vorrichtung gemäß den Ansprüchen 17 und 19 bzw. ein System gemäß Anspruch 22 vor. Weitere Ausgestaltungen der Erfindung ergeben sich aus den jeweiligen Unteransprüchen.

Insbesondere ist ein Verfahren zum Übermitteln von Entschlüsselungscodes für frei übertragene, verschlüsselte Programminhalte und zum automatischen Erstellen von Abrechungsdaten für die Programminhalte vorgesehen, bei dem zunächst eine Verbindung über ein Teilnehmernetz eines Kunden, der auf einen verschlüsselten Programminhalt zugreifen will, hergestellt wird, das Netzabschlusselement insbesondere eine Anrufrufnummer identifiziert wird, der Entschlüsselungscode für einen Programminhalt übermittelt wird und abschließend Abrechnungsdaten anhand des identifizierten Netzabschlusselements insbesondere der Anrufrufnummer und Information über den angeforderten Programminhalt erstellt werden. Dabei wird die Verbindung vorzugsweise durch die Annahme eines Telefonanrufs hergestellt. Bei dem erfindungsgemäßen Verfahren wird die in Teilnehmernetzen insbesondere in der Telekommunikation übliche und eindeutige Identifikationsmöglichkeit von Netzabschlusselementen, wie beispielsweise Telefonnummern im PSDN, oder Identifikationsmittel in GSM bzw. Mobilfunk Netzen sowie IP Adressen in IP Netzen gegebenenfalls auch in Kombination mit Telefonnummern, verwendet, um über eine solche Verbindung den Entschlüsselungscode für die Entschlüsselung von bestimmten Programminhalten anschluss- oder personenbezogen zu verschicken und dem so identifizierten Nutzer zum Empfang zur Verfügung zu stellen. Dieses Verfahren ermöglicht eine einfache Übertragung von Entschlüsselungscodes für Programminhalte an eindeutig identifizierte Nutzer ohne die Notwendigkeit einer Chipkarte. Aufgrund dieser einfachen Übertragung von Entschlüsselungscodes ist es möglich, die Verschlüsselung bzw. die Verschlüsselungssysteme für die Programminhalte regelmäßig zu ändern, da ein jeweils neuer Entschlüsselungscode auf einfache Weise abgefragt werden kann. Beispielsweise können aufeinanderfolgend ausgestrahlte Spielfilme jeweils unterschiedlich verschlüsselt sein, und ein Nutzer kann für jeden einzelnen der Spielfilme einen Entschlüsselungscode abfragen. Dies erhöht wesentlich die Sicherheit gegenüber einer unberechtigten Nutzung durch Dritte, da eine Weitergabe der Entschlüsselungscodes bei einem häufigeren Wechsel der Verschlüsselung bzw. der Verschlüsselungssysteme an unberechtigte Nutzer wesentlich erschwert wird. Darüber hinaus ist es möglich, eine nutzungsabhängige Abrechnung ohne Vorabregistrierung zu ermöglichen. So kann beispielsweise der Entschlüsselungscode für einen einzelnen Spielfilm abgefragt und in Rechnung gestellt werden. Dies erleichtert einerseits den Einstieg von entsprechenden Programminhalte-Anbietern und senkt andererseits die Hemmschwelle bei dem jeweiligen Nutzer, der eine Registrierung und die pauschalierte Abrechnung bei dem bisher etablierten Verfahren scheut.

Vorzugsweise wird bei dem oben genannten Verfahren während der Zeitdauer der Verbindung, insbesondere des Telefonanrufs und vor der Übermittlung des Entschlüsselungscodes wenigstens ein zusätzliches Identifikationsmerkmal beim Anrufer abgefragt. Die Abfrage kann beispielsweise dazu eingesetzt werden, die Übermittlung des Entschlüsselungscodes an unberechtigte Nutzer auszuschließen. Hierzu werden vorzugsweise die Gültigkeit der Identifikationsmerkmale überprüft und der Entschlüsselungscode nur bei Gültigkeit übermittelt. Als zusätzliche Identifikationsmerkmale sind beispielsweise ein alters- bzw. personenbezogener Identifikationscode und/oder eine ldentifikations- oder Gerätenummer eines den Entschlüsselungscode empfangenden Dekoders denkbar. Über den alters- bzw. personenbezogenen Identifikationscode kann beispielsweise der Zugriff auf Programminhalte mit Altersbeschränkung ermöglicht werden, wobei ein derartiger Identifikationscode beispielsweise nur an Personen einer bestimmten Altersgruppe, z.B. über 18 Jahre, ausgegeben wird. Die Abfrage der Identifikations- oder Gerätenummer eines den Entschlüsselungscode empfangenden Dekoders ermöglicht beispielsweise eine Überprüfung, ob es sich hierbei um eine legal erlangtes Gerät handelt. Außerdem könnte die Abfrage Information für ein Treue- bzw. Rabattprogramm liefern.

Darüber hinaus ist es bei einer Ausführungsform der Erfindung möglich, dass der Entschlüsselungscode speziell für den identifizierten Dekoder generiert und an ihn übermittelt wird. Dies kann einerseits beinhalten, dass Dekoder jeweils in Abhängigkeit von ihrer Identifikations- oder Gerätenummer einen internen Entschlüsselungscode enthalten, der in Kombination mit dem speziell hierfür generierten Entschlüsselungscode erst eine erfolgreiche Entschlüsselung ermöglicht. Dies würde eine Weitergabe des Entschlüsselungscodes wesentlich erschweren, da er für den nächsten Dekoder angepasst werden müsste. Darüber hinaus kann aber auch einfach in dem Entschlüsselungscode Information über den empfangenden Dekoder enthalten sein, so dass bei einer nicht berechtigten Weitergabe des Entschlüsselungscodes der Ursprung des Codes ermittelt werden kann. In diesem Zusammenhang ist es bei einer Ausführungsform der Erfindung auch denkbar, Informationen über die Anrufrufnummer in dem übermittelten Entschlüsselungscode einzubauen, um bei einer nicht berechtigten Weitergabe den Ursprung des Entschlüsselungscodes festzustellen.

Wenn über eine angerufene Telefonnummer unterschiedliche Programminhalte zur Verfügung gestellt werden, erfolgt vor der Übermittlung des Entschlüsselungscodes vorzugsweise eine Abfrage für welchen Programminhalt der Entschlüsselungscode übersandt werden soll.

Um eine ordnungsgemäße Abrechnung zu erleichtern, werden für die Abrechnungsdaten zusätzlich wenigstens eine der folgenden Informationen gespeichert bzw. an eine entsprechende Abrechnungseinheit weitergeleitet: die angerufene Rufnummer, die Zeit und/oder Dauer der Telefonverbindung, die zusätzlichen Identifikationsmerkmale, und/oder der übermittelte Entschlüsselungscode. Diese Informationen ermöglichen eine detaillierte Aufschlüsselung der Abrechnungsdaten für den Nutzer und könnte als Beleg bzw. Nachweis für die Lieferung der Leistung dienen, was bisher nicht möglich war.

Bei einer besonders bevorzugten Ausführungsform werden die Abrechnungsdaten zum Inkasso an den Telekommunikationsanbieter, über den der Anruf erfolgte, weitergeleitet. Dieses Verfahren ermöglicht eine für den Nutzer gegenüber dem Programminhalteanbieter anonyme Abrechnung. Dieses Verfahren erleichtert darüber hinaus erheblich den Aufwand für die Abrechnung auf Seiten der Programminhalteanbieter und eignet sich insbesondere für die Abrechnung kleinerer Beträge, wenn beispielsweise einzelne begrenzte Programminhalte abgefragt werden. Dabei ist die angerufene Rufnummer vorzugsweise eine gebührenpflichtige Diensterufnummer, die über den Telekommunikationsanbieter abgerechnet wird.

Die erfindungsgemäße Aufgabe wird auch bei einem Verfahren zum Übermitteln von Entschlüsselungscodes für frei übertragbare verschlüsselte Programminhalte an eine registrierte Kunden- bzw. Teilnehmergruppe gelöst, bei dem eine Verbindung über ein Teilnehmernetz eines Kunden hergestellt, insbesondere ein Telefonanruf empfangen wird, das Netzabschlusselement identifiziert wird, wie z.B. ein Telefonanschluss anhand der Anrufrufnummer, überprüft wird, ob für das Netzabschlusselement ein registriertes Zugriffsrecht für den angeforderten Entschlüsselungscode besteht, und der Entschlüsselungscode bei bestehendem Zugriffsrecht übermittelt wird. Dieses Verfahren eignet sich insbesondere als eine Verbesserung für das bisher etablierte Verfahren, bei dem eine registrierte Teilnehmergruppe vorhanden ist, die beispielsweise auch ein pauschaliertes Abrechnungssystem verwendet. Aufgrund der relativ einfachen Übermittlung des Entschlüsselungscodes, unabhängig von einer Chipkarte, wird dem Programminhalteanbieter ermöglicht, häufiger die Verschlüsselung für die Programminhalte zu ändern. Beispielsweise können die Verschlüsselungscodes und oder -systeme in unregelmäßigen oder in festgesetzten Zeitintervallen, beispielsweise täglich oder wöchentlich, geändert werden, was ein Knacken des Codes und eine unberechtigte Weitergabe an Dritte erheblich erschwert. Darüber hinaus ist natürlich auch eine nutzungsspezifische Abrechnung für die registrierte Teilnehmergruppe, unabhängig von einem pauschalierten Verfahren, möglich.

Vorzugsweise wird neben dem identifizierten Netzabschlusselement bzw. der Anrufrufnummer wenigstens ein zusätzliches Identifikationsmerkmal von dem Kunden abgefragt, und vorzugsweise dessen Gültigkeit überprüft. Hierbei ergeben sich die schon oben genannten Vorteile. Dabei beinhaltet das zusätzliche Identifikationsmerkmal vorzugsweise wenigstens einen alters- oder personenbezogenen Identifikationscode und/oder einen Identifikationscode eines den Entschlüssungscode empfangenden Dekoders. Beispielsweise kann der Entschlüsselungscode spezifisch für den empfangenden Dekoder erstellt werden. Auch bei dieser Ausführungsform kann der Entschlüsselungscode beispielsweise Informationen über die Anrufrufnummer beinhalten, um bei einer unberechtigten Weiterleitung an Dritte den Ursprung des Entschlüsselungscodes festzustellen.

Wenn über eine angerufene Rufnummer unterschiedliche Programminhalte zur Verfügung gestellt werden, wird vor der Übermittlung des Entschlüsselungscodes vorzugsweise abgefragt, für welchen Programminhalt der Entschlüsselungscode benötigt wird.

Bei einer Ausführungsform der Erfindung werden die Anrufrufnummer und Informationen betreffend den Programminhalt für den der Entschlüsselungscode übermittelt wurde gespeichert, und/oder für Abrechnungszwecke an eine entsprechende Einheit weitergeleitet. Vorzugsweise können wenigstens eine der folgenden zusätzlichen Informationen gespeichert und/oder für Abrechnungszwecke weitergeleitet werden: Die angerufene Rufnummer, der Zeitpunkt und/oder die Dauer des Telefonanrufs, die zusätzlichen Identifikationsmerkmale und/oder der übermittelte Entschlüsselungscode.

Die der vorliegenden Erfindung zugrundeliegende Aufgabe wird auch durch eine Vorrichtung zum Übermitteln von Entschlüsselungscodes für frei übertragene entschlüsselte Programminhalte und zum automatischen Abrechnen derselben gelöst, bei der die Vorrichtung eine Einheit zum Herstellen einer Verbindung über eine Teilnehmernetz eines Kunden, insbesondere eine Telefoneinheit zum Empfang von Telefonanrufen, eine Einheit zum Ermitteln des Natzabschlusselements, insbesondere der Anrufrufnummer des Kunden, eine Einheit zum Übermitteln des Entschlüsselungscodes und eine Einheit zum Speichern und/oder Weiterleiten von Abrechnungsdaten, bestehend aus dem Netzabschlusselement, insbesondere der Anrufrufnummer und Informationen betreffend den Programminhalt, für den der Entschlüsselungscode übermittelt wurde, aufweist. Eine derartige Vorrichtung ermöglicht eine einfache Übermittlung von Entschlüsselungscodes für verschlüsselte Programminhalte, sowie eine einfache Abrechnung für diese Übermittlung. Vorzugsweise ist eine Vergleichseinheit zum Vergleichen eines eingegebenen Codes mit einem gespeicherten Berechtigungscode vorgesehen, der beispielsweise den zuvor genannten Identifikationsmerkmalen entspricht.

Die Aufgabe wird ferner durch eine Vorrichtung zum Übermitteln von Entschlüsselungscodes für frei übertragene, verschlüsselte Programminhalte an eine registrierte Teilnehmergruppe gelöst, wobei die Vorrichtung eine Einheit zum Herstellen einer Verbindung über eine Teilnehmernetz eines Kunden, insbesondere eine Telefoneinheit zum Empfang von Telefonanrufen; eine Einheit zum Erkennen des Netzabschlusselements, insbesondere der Anrufrufnummer des Kunden; eine Speichereinheit zum Speichern einer registrierten Teilnehmergruppe mit ihrem jeweiligen Netzabschlusselement bzw. ihren Anrufrufnummern; eine Einheit zum Vergleichen des identifizierten Netzabschlusselements, insbesondere der identifizierten Anrufrufnummer mit den registrierten Daten und eine Einheit zum Übermitteln des Entschlüsselungscodes aufweist.

Die der vorliegenden Erfindung zugrundeliegende Aufgabe wird auch durch ein System zum Entschlüsseln von frei übertragenen, verschlüsselten Programminhalten gelöst, das eine Empfangseinheit zum Empfang des Programminhalts, eine Einheit zum Herstellen einer Verbindung über eine Teilnehmernetz eines Kunden, insbesondere einer Telekommunikationsverbindung, mit einer Entschlüsselungscodeübertragungseinheit, einen Speicher zum Speichern eines über die Verbindung übermittelten Entschlüsselungscode und einen Dekoder aufweist. Dieses System ermöglicht eine einfache und rasche Abfrage von Entschlüsselungscodes bei entsprechenden Programminhalteanbietern. Dabei weist das System vorzugsweise einen Speicher zum Speichern von Information für den Verbindungsaufbau, insbesondere einer anzurufenden Telefonnummer auf, sofern es sich hierbei um eine festgelegte Rufnummer handelt. Alternativ und/oder zusätzlich weist das System vorzugsweise eine Einheit zum Eingeben von Information für den Verbindungsaufbau, insbesondere einer anzurufenden Telefonnummer und/oder zusätzlicher Informationen auf.

Bei einer besonders bevorzugten Ausführungsform weist das System eine Fehlerdetektiereinheit auf, die erkennt, ob der gespeicherte Entschlüsselungscode einen gewünschten Programminhalt richtig entschlüsselt. Hierdurch kann eine entsprechende Fehlermeldung vorgesehen werden, oder eine automatische Neuabfrage des Codes erfolgen. Dies ist insbesondere bei registrierten Teilnehmern mit pauschalierter Abrechnung vorteilhaft, da durch die automatische Neuabfrage keine zusätzlichen Kosten entstehen und somit für den Nutzer kein Kostenrisiko durch die automatische Abfragefunktion entsteht. Bei einer weiteren Ausführungsform der Erfindung umfasst das System eine Einheit zum automatischen Herstellen einer Verbindung und zum Abfragen eines Entschlüsselungscodes zu vorgegebenen Zeitpunkten. Dies ist insbesondere zweckmäßig, wenn das System in Verbindung mit einer Registrierung und pauschalierten Abrechnung verwendet wird, um jederzeit bei einer entsprechenden, zeitlich vorgegebenen Änderung des Verschlüsselungscodes, einen entsprechenden Entschlüsselungscode vorzuhalten. Dabei können die vorgegebenen Zeitpunkte entweder durch Zeitintervalle festgelegt werden, wie beispielsweise eine tägliche oder wöchentliche Abfrage, oder der Zeitpunkt kann durch das Einschalten der Einheit vorgegeben werden. Beispielsweise kann eine automatische Abfrage des Entschlüsselungscodes bei jedem Einschalten der Einheit erfolgen. Natürlich ist auch eine Kombination hieraus möglich.

Vorzugsweise sind die Einheit zum Erstellen einer Telekommunikationsverbindung, der Speicher zum Speichern des Entschlüsselungscodes, der Speicher zum Speichern von Information für den Verbindungsaufbau, insbesondere einer anzurufenden Telefonnummer, die Eingabeeinheit und/oder die Fehlerdetektiereinheit im Dekoder integriert.

Die vorliegende Erfindung wird nachfolgend anhand bevorzugter Ausführungsbeispiele der Erfindung unter Bezugnahme auf die Zeichnungen näher erläutert; in den Zeichnungen zeigt:
- Fig. 1: eine schematische Darstellung zum Ausstrahlen von verschlüsselten Programminhalten und zum Übermitteln und Empfangen von Entschlüs- selungscodes für die Programminhalte gemäß einer ersten Ausfüh- rungsform der Erfindung;
- Fig. 2: eine schematische Darstellung zum Ausstrahlen von verschlüsselten Programminhalten und zum Übermitteln und Empfangen von Entschlüs- selungscodes für die Programminhalte gemäß einem zweiten Ausfüh- rungsbeispiel der Erfindung;

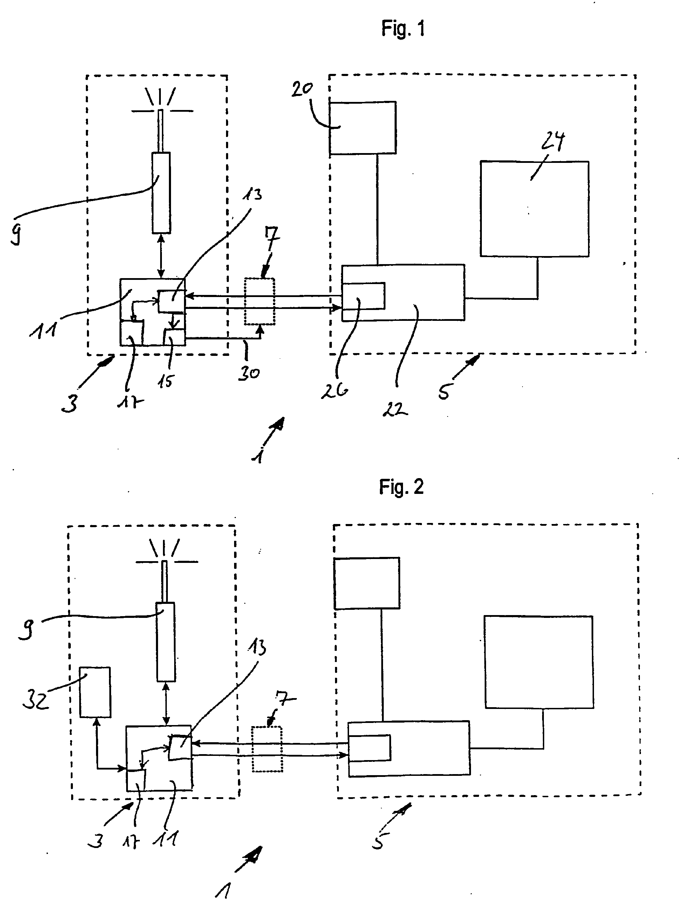

Fig. 1 zeigt schematisch ein System 1 für die Ausstrahlung verschlüsselter Programminhalte und zum Übermitteln von Entschlüsselungscodes hierfür. Das System 1 beinhaltet einen Bereich 3 eines Programminhalteanbieters, einen Bereich 5 eines Nutzers der Programminhalte und einen Bereich 7 eines Telekommunikationsanbieters.

Im Bereich 3 des Programminhalteanbieters ist eine Sendeeinheit 9, sowie eine Codeeinheit 11 vorgesehen. Die Sendeeinheit 9 steht mit der Codeeinheit 11 in Kommunikationsverbindung, und dient dazu, verschlüsselte Programminhalte frei auszustrahlen. Der Begriff "Ausstrahlen" beinhaltet hierbei jegliche einseitige Informationsübertragung, beispielsweise über terrestrische Antennen, Satelliten oder eine leitungsgebundene Übertragung, wie beispielsweise über Kabelanschlüsse. Die Kommunikationsverbindung zwischen der Sendeeinheit 9 und der Codeeinheit 11 dient zur Übertragung des mit dem Programminhalt ausgestrahlten Verschlüsselungscode. Dieser kann beispielsweise durch die Codeeinheit 11 der Sendeeinheit vorgegeben werden, oder die Sendeeinheit gibt den derzeitig verwendeten Verschlüsselungscode oder einen entsprechenden Entschlüsselungscode an die Codeeinheit 11 weiter.

Die Codeeinheit 11 beinhaltet ein entsprechendes Kommunikationsmodul zur Kommunikation mit der Sendeeinheit 9, das nicht näher dargestellt ist. Die Codeeinheit 11 weist ferner eine Kommunikationseinheit 13 zum Empfang von durch den Telekommunikationsanbieter 7 vermittelte Telefonanrufe auf. Die Kommunikationseinheit 13 oder eine gesonderte Einheit ist ferner in der Lage, die Anrufrufnummer eines eingehenden Anrufs zu identifizieren, sowie einen angeforderten Entschlüsselungscode zu übermitteln. Ferner weist die Codeeinheit 11 eine Einheit 15 zum Speichern und/oder Weiterleiten von Abrechnungsdaten, bestehend aus der ermittelten Anrufrufnummer und Information betreffend den Programminhalt, für den der Entschlüsselungscode übermittelt wurde, auf. Hierzu ist zwischen den Einheiten 13 und 15 eine entsprechende Kommunikationsverbindung vorgesehen. Natürlich können die Einheiten 13 und 15 auch in einer einzelnen Einheit integriert sein.

Die Einheit 13 ist ferner zum Empfang weiterer Informationen seitens eines Anrufers geeignet. Die Codeeinheit 11 weist ferner eine Vergleichseinheit 17 auf, welche empfangene Informationen mit zuvor gespeicherten Informationen vergleicht, und auf der Basis des Vergleichs entscheidet, ob ein Entschlüsselungscode an einen Anrufer übermittelt wird oder nicht.

Obwohl in Fig. 1 die Codeeinheit 11 als im Bereich des Programminhalteanbieters 3 liegend dargestellt ist, könnte die Codeeinheit 11 oder einzelne Teile davon im Bereich des Telekommunikationsanbieters 7 liegen.

Der Nutzerbereich 5 besitzt eine Empfangseinheit 20 zum Empfang des ausgestrahlten Programminhalts, wie beispielsweise eine Satellitenschüssel oder eine Antenne oder einem Kabelanschluss, einen Dekoder 22 zum Entschlüsseln des Programminhalts und eine Einheit 24 zum Darstellen und/oder Aufzeichnen des Programminhalts, wie beispielsweise einen Fernseher. Darüber hinaus ist eine Einheit 26 zum Herstellen einer Telekommunikationsverbindung mit der Codeeinheit 11 sowie ein Speicher zum Speichern eines über die Telekommunikationsverbindung übermittelten Entschlüsselungscodes vorgesehen. Die Einheit 26 ist beispielsweise ein in dem Dekoder 22 integriertes Modem. Alternativ kann natürlich auch ein externes Modem vorgesehen sein. Der Speicher zum Speichern des Entschlüsselungscodes ist vorzugsweise ebenfalls in dem Dekoder 22 vorgesehen. Alternativ kann der Speicher aber auch extern vorgesehen sein, sofern der Dekoder 22 auf den Entschlüsselungscode zugreifen kann. Beispielsweise können wiederbeschreibbare Speicherelemente in einem separaten Schreibgerät beschrieben und dann mit Dekoder 22 verbunden werden.

Der Nutzerbereich 5 kann sowohl stationär in einen normalen Haushalt vorgesehen sein als auch mobil ausgebildet sein. So können die einzelnen Komponenten beispielsweise in einen Wohnwagen stehen und die notwendige Herstellung einer Verbindung mit dem Programminhalteanbieter kann beispielsweise über eine Mobilfunkverbindung erfogen.

Die Funktion des Systems 1 wird nachfolgend anhand der Fig. 1 näher erläutert. Über die Sendeeinheit 9 werden verschlüsselte Programminhalte ausgestrahlt, wobei mehrere Programminhalte mit jeweils unterschiedlichen Verschlüsselungen parallel und/oder sequentiell ausgestrahlt werden können. In der Codeeinheit 11 werden Entschlüsselungscodes für die verschlüsselten Programminhalte bereitgehalten. Dabei ist es möglich, Entschlüsselungscodes sowohl für derzeitig ausgestrahlte Programminhalte als auch für zukünftig ausgestrahlte Programminhalte bereitzuhalten. Natürlich ist es auch möglich, nur einen einzelnen Entschlüsselungscode für einen einzelnen Programminhalt bereitzuhalten.

Wenn nun ein Nutzer einen verschlüsselten Programminhalt auf seinem Fernseher 24 darstellen will, braucht er einen entsprechenden Entschlüsselungscode hierfür, damit der Dekoder 22 das ankommende, verschlüsselte Signal in geeigneter Weise für die Darstellung auf dem Fernseher 24 entschlüsseln kann. Um den Entschlüsselungscode in Erfahrung zu bringen, wird daher über die Einheit 26 und einen Telekommunikationsanbieter 7 eine vermittelte Telekommunikationsverbindung zu der Einheit 13 in der Codeeinheit 11 hergestellt. Diese Verbindung kann zum Beispiel über eine Diensterufnummer des Telekommunikationsanbieters 7 erfolgen. Nach Empfang des Telefonanrufs an der Einheit 13 ermittelt diese die Anrufrufnummer, von der aus sie angerufen wurde, und sendet nach erfolgreicher Ermittlung einen Entschlüsselungscode über die Telekommunikationsverbindung zurück an die Einheit 26. Die Einheit 26 empfängt den Entschlüsselungscode und dieser wird in geeigneter Weise zur Verwendung durch den Dekoder 22 gespeichert. Nach Übermittlung des Entschlüsselungscodes wird die Telekommunikationsverbindung beendet. Der Dekoder 22 ist nunmehr in der Lage, einen über die Empfangseinheit 20 empfangenen verschlüsselten Programminhalt zur ordnungsgemäßen Darstellung auf dem Fernseher 24 darzustellen.

In der Codeeinheit 11 werden in der Einheit 15 Abrechnungsdaten erstellt, die die ermittelte Anrufrufnummer sowie Information über den Programminhalt, für den der Entschlüsselungscode übermittelt wurde, erstellt und über eine entsprechende Kommunikationsverbindung 30 zum Inkasso an den Telekommunikationsanbieter 7 weitergeleitet.

Die obige Funktionsbeschreibung erklärt nur ein Grundkonzept einer Nutzung des Systems 1, das in vielen Punkten geändert werden kann, ohne vom Grundgedanken der Erfindung abzuweichen. Beispielsweise ist es nicht notwendig, die Abrechnungsdaten zum Inkasso an den Telekommunikationsanbieter 7 weiterzuleiten. Vielmehr könnte der Programminhalteanbieter anhand der Abrechnungsdaten auch direkt eine Rechnungsstellung in die Wege leiten. Die in den Abrechnungsdaten enthaltene Information betreffend den Programminhalt, für den der Entschlüsselungscode enthalten ist, kann auf unterschiedlichste Weise dargestellt werden. Beispielsweise kann diese Information in der angerufenen Rufnummer, wie beispielsweise der Diensterufnummer, enthalten sein. Beispielsweise könnte die Einheit 13 Anrufe für unterschiedliche Diensterufnummern entgegennehmen und je nach Diensterufnummer einen entsprechenden Entschlüsselungscode ausgeben. Natürlich können die Abrechnungsdaten auch noch zusätzliche Informationen beinhalten, welche auch wiederum wenigstens teilweise Informationen über den angeforderten Programminhalt vorsehen können. Derartige Informationen sind insbesondere die Zeit und/oder Dauer der Telefonverbindung und/oder der übermittelte Entschlüsselungscode.

Neben einer Ermittlung der Anrufrufnummer durch die Einheit 13 kann es vor Übermittlung des Entschlüsselungscodes ferner zweckmäßig und/oder notwendig sein, zusätzliche Informationen über den Anrufer zu erhalten. Hierzu kann beispielsweise an der Einheit 26 eine entsprechende Eingabeeinheit vorgesehen sein, die beispielsweise auch die Eingabe einer anzurufenden Rufnummer beinhaltet. Vorzugsweise erfolgt diese Eingabe über eine Tastatur an dem Dekoder oder eine entsprechende Fernbedienung des Dekoders. Natürlich kann sowohl der Verbindungsaufbau als auch die Eingabe zusätzlicher Information über jedes geeignete interaktive Endgerät, wie beispielsweise ein Telefon erfolgen.

Die zusätzliche Information über den Anrufer beinhaltet beispielsweise einen alters- oder personenbezogenen Identifikationscode oder eine Identifikations-oder Gerätenummer des Dekoders 22. Diese zusätzliche Information kann in beliebiger Form, beispielsweise aus einem Zahlencode, der in eindeutig identifizierbarer Weise über die Telekommunikationsverbindung übermittelt werden kann, bestehen. Diese zusätzlichen Informationen werden an der Einheit 13 empfangen und in der Vergleichseinheit 17 mit gespeicherten Informationen verglichen, und nur bei entsprechender Übereinstimmung der empfangenen Informationen mit gespeicherten Informationen wird der angeforderte Entschlüsselungscode freigegeben und übertragen. Wenn beispielsweise die Identifikations- oder Gerätenummer des Dekoders 22 abgefragt wird, kann diese Information automatisch durch den Dekoder bereitgestellt werden.

Anhand der Identifikations- oder Gerätenummer des Dekoders kann beispielsweise ein speziell für den Dekoder geeigneter Entschlüsselungscode generiert und übermittelt werden.

Beispielsweise ist es möglich, dass jeder Dekoder einen durch die Identifikations- oder Gerätenummer identifizierbaren Quellcode beinhaltet, der in Kombination mit dem übermittelten Entschlüsselungscode eine erfolgreiche Decodierung ermöglicht. Dabei könnte der Quellcode auf einem nicht überschreitbaren Speichermedium gespeichert sein. Wenn derselbe Entschlüsselungscode in einem Dekoder mit einem unterschiedlichen Quellcode kombiniert würde, wäre eine erfolgreiche Decodierung der verschlüsselten Programminhalte hingegen nicht möglich, was eine unbefugte Weitergabe des Entschlüsselungscodes sinnlos machen würde. Zusätzlich oder alternativ könnte der Entschlüsselungscode aber auch einfach Information über den identifizierten Dekoder und/oder die ermittelte Anrufrufnummer enthalten - welche für die Entschlüsselung des verschlüsselten Programminhalts nicht notwendig ist - um bei einer unberechtigten Weitergabe des Entschlüsselungscodes dessen Ursprung ermitteln zu können.

Die zusätzlich an der Empfangseinheit 13 empfangenen Daten können ebenfalls für die Abrechnungsdaten gespeichert bzw. weitergeleitet werden.

Fig. 2 zeigt ein abgewandeltes System 1, wobei in Fig. 2 dieselben Bezugszeichen verwendet werden, sofern dieselben oder äquivalente Elemente vorgesehen sind. Das System 1 weist wiederum einen Bereich 3 eines Programminhalteanbieters, einen Bereich 5 eines Nutzers und einen Bereich 7 eines Telekommunikationsanbieters auf. Im Bereich 3 ist eine Sendeeinheit 9 sowie eine Codeeinheit 11 vorgesehen. Darüber hinaus ist eine Datenbank 32 vorgesehen, in der Informationen einer registrierten Teilnehmergruppe enthalten sind. Statt die Daten in einer externen Datenbank 32 vorzuhalten, ist es natürlich auch möglich, die Daten innerhalb der Codeeinheit 11 oder auf andere Weise bereitzuhalten.

Obwohl in Fig. 2 die Codeeinheit 11 und die Datenbank 32 als im Bereich des Programminhalteanbieters 3 liegend dargestellt ist, könnten die Codeeinheit 11, die Datenbank 32 und/oder einzelne Teile davon im Bereich des Telekommunikationsanbieters 7 liegen.

Das System arbeitet im Wesentlichen in ähnlicher Weise wie das zuvor beschriebene System, wobei zunächst über die Sendeeinheit 9 ein verschlüsselter Programminhalt ausgestrahlt wird. Wenn ein Nutzer den Programminhalt auf einer Wiedergabeeinheit 24 darstellen/aufzeichnen will, wird wiederum eine Telekommunikationsverbindung über einen Anbieter 7 zu der Codeeinheit 11 hergestellt. Innerhalb der Codeeinheit 11 wird die Anrufrufnummer ermittelt, und dann wird bei der Datenbank 32 angefragt, ob für diese Anrufrufnummer ein registriertes Zugriffsrecht für den Entschlüsselungscode besteht. Wenn das Zugriffsrecht besteht, wird der Entschlüsselungscode übertragen, und der Dekoder 22 in die Lage versetzt, den verschlüsselten Programminhalt in ordnungsgemäßer Weise darzustellen. Bei diesem System ist somit eine Vorabregistrierung unter Angabe der Anrufrufnummer notwendig. Dieses System kann beispielsweise insbesondere in einer Situation verwendet werden, bei dem registrierte Nutzer pauschalierte Nutzungsgebühren bezahlen, aber ein regelmäßiger Wechsel des Verschlüsselungscodes eine regelmäßige Neuabfrage erforderlich macht. Dabei ist es beispielsweise möglich, dass der Dekoder 22 nach vorbestimmten Zeitintervallen oder bei jedem Einschaltvorgang eine entsprechende Abfrage initiiert. Es ist auch möglich, dass der Dekoder 22 eine Fehlerdetektiereinheit beinhaltet, die feststellt ob das verschlüsselte Signal mit dem gespeicherten Entschlüsselungscode ordnungsgemäß entschlüsselt wurde, und bei einer Fehlermeldung automatisch ein entsprechendes Signal ausgibt, oder automatisch eine Neuabfrage des Entschlüsselungscodes initiiert.

Natürlich kann das System auch in Kombination mit einer nutzungsabhängigen Abrechnung gegenüber den registrierten Teilnehmern verwendet werden.

Zusätzlich zur Überprüfung einer Zugriffsberechtigung über die Anrufrufnummer, können wie bei dem vorhergehenden Ausführungsbeispiel zusätzliche Informationen abgefragt und in entsprechender Weise verwendet werden.

Wenn über die angerufene Rufnummer unterschiedliche Entschlüsselungscodes für unterschiedliche Programminhalte abgerufen werden können, muss beispielsweise auch eine Übermittlung von Informationen betreffend den gewünschten Programminhalt seitens des Nutzers möglich sein. Eine derartige Information kann beispielsweise über eine Tastatur des Dekoders oder dessen Fernbedienung eingegeben werden. Natürlich kann wiederum sowohl der Verbindungsaufbau als auch die Eingabe zusätzlicher Information über jedes geeignete interaktive Endgerät, wie beispielsweise ein Telefon erfolgen.

Das zuvor beschriebene System bzw. dessen Funktion ermöglicht somit eine anschlussbezogene Vermittlung von Entschlüsselungscodes für frei ausgestrahlte verschlüsselte Programminhalte. Der Anschluss ermöglicht wiederum eine entsprechende Abrechnung gegenüber dem Nutzer sowie eine genaue Identifizierung des Nutzers. Wie zuvor beschrieben, können zusätzliche Informationen über den Nutzer abgefragt werden, sofern dies erforderlich ist. Insbesondere bei Programminhalten, die einer Altersbeschränkung unterliegen, ist es möglich, einen Identifikationscode abzufragen, der nur an Personen einer bestimmten Altersgruppe ausgegeben wird. Derartige Identifikationscodes können auch an bestimmte Personengruppen, beispielsweise eines Unternehmens, Studenten etc. bereitgestellt werden, um sicherzustellen, dass nur ihnen ein Entschlüsselungscode für einen bestimmten verschlüsselten Programminhalt zur Verfügung gestellt wird.

Wenn es sich bei der Einwahlrufnummer zum Abrufen des Entschlüsselungscodes um eine Diensterufnummer handelt, kann beispielsweise ein nutzungsabhängiges Entgelt über die Telefonrechnung inkassiert werden, ohne den jeweiligen Nutzer namentlich zu registrieren. Dies ist insbesondere für neue Programminhalteanbieter von Interesse, da diese sofort ohne Vorabregistrierung von Nutzern Programminhalte zur Verfügung stellen können, und eine entsprechende Bezahlung der Programminhalte gewährleistet ist, sofern eine Nutzung vorliegt. Die Programminhalte können über die anzuwählende Rufnummer identifiziert werden oder alternativ bei bestehender Telekommunikationsverbindung angegeben werden. Über die Einwahlrufnummer kann die Auswahl der Programminhalte, der Zeitraum und/oder die Dauer für die eine Entschlüsselung erforderlich ist, erfolgen. Ggf. kann sie sogar Informationen im Rechnungsausdruck einer Telefonrechnung oder alternative Abrechnungsmöglichkeiten festlegen.

Obwohl die Erfindung anhand bevorzugter Ausführungsbeispiele beschrieben wurde, ist sie nicht auf die konkret dargestellten Ausführungsbeispiele beschränkt. Die Merkmale der unterschiedlichen Ausführungsbeispiele können frei miteinander kombiniert und/oder ausgetauscht werden, sofern sie miteinander kompatibel sind.

## Patentansprüche

1. Verfahren zum Übermitteln von Entschlüsselungscodes für frei übertragene, verschlüsselte Programminhalte und zum automatischen Erstellen von Abrechnungsdaten für die Programminhalte mit folgenden Schritten:
a) Herstellen einer Verbindung mit einem Diensteanbieter durch einen Kunden über dessen Teilnehmernetz;
b) Ermitteln der Netzabschlusselemente der bestehenden Verbindung, insbesondere das Identifizieren der Anrufrufnummer des Kunden und der angerufenen Nr. des Diensteanbieters;
c) Übermitteln des Entschlüsselungscodes für einen Programminhalt;
d) Erstellen von Abrechnungsdaten anhand des Netzabschlusselements, insbesondere der Anrufrufnummer, der angerufenen Nr. des Diensteanbieters, und Information über den angeforderten Programminhalt, wobei in den Entschlüsselungscode Information über die identifizierte Anrufrufnummer des Kunden integriert wird.

2. Verfahren nach Anspruch 1, **dadurch gekennzeichnet, dass** das Herstellen der Verbindung durch den Kunden durch das Wählen einer Rufnummer des Diensteanbieters und das Annehmen des Telefonanrufs durch den Diensteanbieter erfolgt.

3. Verfahren nach Anspruch 1 oder 2, **dadurch gekennzeichnet, dass** während der Zeitdauer des Telefonanrufs und vor der Übermittlung des Entschlüsselungscodes wenigstens ein zusätzliches Identifikationsmerkmal beim Anrufer abgefragt werden.

4. Verfahren nach Anspruch 3, **dadurch gekennzeichnet, dass** die Gültigkeit der Identifikationsmerkmale überprüft wird, und der Entschlüsselungscode nur bei Gültigkeit übermittelt wird.

5. Verfahren nach Anspruch 3 oder 4, **dadurch gekennzeichnet, dass** die zusätzlichen Identifikationsmerkmale wenigstens eines der Folgenden beinhalten:
einen alters- oder personenbezogenen Identifikationscode,
eine Identifikations- oder Gerätenummer eines den Entschlüsselungscode empfangenden Dekoders.

6. Verfahren nach einem der vorhergehenden Ansprüche, **dadurch gekennzeichnet, dass** vor der Übermittlung des Entschlüsselungscodes eine Abfrage erfolgt, für welchen Programminhalt der Entschlüsselungscode übersandt werden soll.

7. Verfahren nach einem der vorhergehenden Ansprüche, **dadurch gekennzeichnet, dass** für die Abrechnungsdaten wenigstens eine der folgenden Informationen gespeichert bzw. an eine entsprechende Abrechnungseinheit weitergeleitet wird: die angerufene Rufnummer, die Zeit und/oder Dauer der Telefonverbindung, die zusätzlichen Identifikationsmerkmale, und/oder der übermittelte Entschlüsselungscode.

8. Verfahren nach einem der vorhergehenden Ansprüche, **dadurch gekennzeichnet, dass** die Abrechnungsdaten zum Inkasso an die Telekommunikationsanbieter weitergeleitet werden.

9. Verfahren nach einem der vorhergehenden Ansprüche, **dadurch gekennzeichnet, dass** die angerufene Rufnummer eine Diensterufnummer ist, die über den Telekommunikationsanbieter abgerechnet wird.

10. Verfahren nach einem der vorhergehenden Ansprüche, **dadurch gekennzeichnet, dass** der Entschlüsselungscode speziell für einen identifizierten Dekoder des Kunden generiert und an ihn übermittelt wird.

11. Verfahren zum Übermitteln von Entschlüsselungscodes für frei übertragene, verschlüsselte Programminhalte an eine registrierte Teilnehmergruppe mit folgenden Schritten:
a) Herstellen einer Verbindung mit einem Diensteanbieter durch einen Kunden über dessen Teilnehmernetz;
b) Ermitteln der Netzabschlusselemente der bestehenden Verbindung, insbesondere das Identifizieren der Anrufrufnummer des Kunden und der angerufenen Nr. des Diensteanbieters;
c) Überprüfen, ob für das Netzabschlusselement des Kunden, insbesondere die Anrufrufnummer ein registriertes Zugriffsrecht für den Entschlüsselungscode besteht;
d) Übermitteln des Entschlüsselungscodes bei bestehendem Zugriffsrecht,
wobei in den Entschlüsselungscode Information über die identifizierte Anrufrufnummer des Kunder integriert wird.

12. Verfahren nach Anspruch 11, **dadurch gekennzeichnet, dass** das Herstellen der Verbindung den Kunden durch das Wählen einer Rufnummer des Diensteanbieters und das Annehmen des Telefonanrufs durch den Diensteanbieter erfolgt.

13. Verfahren nach Anspruch 11 oder 12, **dadurch gekennzeichnet, dass** neben dem Netzabschlusselement bzw. der Anrufnummer wenigstens ein zusätzliches Identifikationsmerkmal von dem Anrufer abgefragt wird.

14. Verfahren nach Anspruch 13, **dadurch gekennzeichnet, dass** das zusätzliche Identifikationsmerkmal wenigstens einen alters- oder personenbezogenen Identifikationscode und/oder einen Identifikationscode eines den Entschlüsselungscode empfangenden Dekoders beinhaltet.

15. Verfahren nach einem der Ansprüche 11 bis 14, **dadurch gekennzeichnet, dass** für die Übermittlung des Entschlüsselungscodes abgefragt wird, für welchen Programminhalt der Entschlüsselungscode benötigt wird.

16. Verfahren nach einem der Ansprüche 11 bis 15, **dadurch gekennzeichnet, dass** die Anrufrufnummer und Informationen betreffend den Programminhalt, für den der Entschlüsselungscode übermittelt wurde, gespeichert und/oder für Abrechnungszwecke an eine entsprechende Einheit weitergeleitet werden.

17. Verfahren nach Anspruch 16, **dadurch gekennzeichnet, dass** wenigstens eine der folgenden Informationen gespeichert und/oder für Abrechnungszwecke weitergeleitet wird: die angerufene Rufnummer, der Zeitpunkt und/oder die Dauer des Telefonanrufs, die zusätzlichen Identifikationsmerkmale und/oder übermittelte Entschlüsselungscode.

18. Verfahren nach einem der Ansprüche 11 bis 17, **dadurch gekennzeichnet, dass** der Entschlüsselungscode speziell für einen identifizierten Dekoder des Kunden generiert und an ihn übermittelt wird.

19. Vorrichtung zum Übermitteln von Entschlüsselungscodes für frei übertragene verschlüsselte Programminhalte und zum automatischen Abrechnen derselben, wobei die Vorrichtung Folgendes aufweist:
eine Einheit zum Herstellen einer Verbindung zwischen einem Kunden und einem Diensteanbieter über ein Teilnehmernetz des Kunden, insbesondere einer Telefonverbindung zwischen einem Kunden und einem Diensteanbieter;
eine Einheit zum Ermitteln der Netzabschlusselemente der bestehenden Verbindung zwischen dem Kunden und dem Diensteanbieter, insbesondere der Identifikation der Anrufrufnummer des Kunden und der angerufenen Nr. des Diensteanbieters;
eine Einheit zum Übermitteln des Entschlüsselungscodes; und
eine Einheit zum Speichern und/oder Weiterleiten von Abrechnungsdaten, bestehend aus den Netzabschlusselementen, insbesondere der Anrufnummer des Kunden und der angerufenen Nr. des Diensteanbieters,
und Information betreffend den Programminhalt, für den der Entschlüsselungscode übermittelt wurde,
wobei in den Entschlüsselungscode Information über die identifizierte Anrufrufnummer des Kunden integriert wird.

20. Vorrichtung nach Anspruch 19, wobei der Entschlüsselungscode speziell für einen identifizierten Dekoder des Kunden generiert und an ihn übermittelt wird.

21. Vorrichtung nach Anspruch 19 oder 20, **dadurch gekennzeichnet, dass** eine Vergleichseinheit zum Vergleichen einer empfangenen Information mit gespeicherten Informationen vorgesehen ist.

22. Vorrichtung zum Übermitteln von Entschlüsselungscodes für frei übertragene verschlüsselte Programminhalte an eine registrierte Teilnehmergruppe, die Folgendes aufweist:
eine Einheit zum Herstellen einer Verbindung zwischen einem Kunden und einem Diensteanbieter über ein Teilnehmernetz des Kunden, insbesondere einer Telefonverbindung zwischen einem Kunden und einem Diensteanbieter ;
eine Einheit zum Ermitteln der Netzabschlusselemente der bestehenden Verbindung zwischen dem Kunden und dem Diensteanbieter, insbesondere des Identifikation der Anrufrufnummer eines Kunden und der angerufenen Nr. des Diensteanbieters;
eine Speichereinheit zum Speichern von Daten einer registrierten Teilnehmergruppe mit ihren jeweiligen Netzabschlusselementen, insbesondere ihren Rufnummern;
eine Einheit zum Vergleichen der Netzabschlusselemente, insbesondere der ermittelten Rufnummern mit den registrierten Daten; und
eine Einheit zum Übermitteln des Entschlüsselungscodes,
wobei in den Entschlüsselungscode Information über die identifizierte Anrufrufnummer des Kunden integriert wird.

23. Vorrichtung nach Anspruch 22, **dadurch gekennzeichnet, dass** der Entschlüsselungscode speziell für einen identifizierten Dekoder des Kunden generiert und an ihn übermittelt wird.

24. Vorrichtung nach Anspruch 22 oder 23, **gekennzeichnet durch** eine Einheit zum Speichern und/oder Weiterleiten von Abrechnungsdaten, bestehend aus wenigstens der Anrufnummer des Kunden, der angerufenen Nr. des Diensteanbieters und Information betreffend den Programminhalt, für den der Entschlüsselungscode übermittelt wurde.

25. Vorrichtung nach einem der Ansprüche 22 bis 24, **dadurch gekennzeichnet, dass** eine Vergleichseinheit zum Vergleichen einer empfangenen Information mit gespeicherten Informationen vorgesehen ist.

26. System zum Entschlüsseln von frei übertragenen, verschlüsselten Programminhalten, wobei das System Folgendes aufweist:
eine Empfangseinheit zum Empfang des verschlüsselten Programminhalts;
eine Einheit zum Herstellen einer Verbindung zwischen einem Kunden und einer Entschlüsselungscodeübertragungseinheit eines Diensteanbieter über ein Teilnehmernetz des Kunden;
einen Speicher zum Speichern eines über die Verbindung übermittelten Entschlüsselungscodes; und
einen Dekoder zum Entschlüsseln des verschlüsselten Programminhalts unter Zuhilfenahme des Entschlüsselungscodes,
wobei in dem Entschlüsselungscode Information über die identifizierte Anrufrufnummer des Kunden integriert ist.

27. System nach Anspruch 26, **dadurch gekennzeichnet, dass** der Entschlüsselungscode speziell für einen identifizierten Dekoder des Kunden generiert ist.

28. System nach Anspruch 26 oder 27, **dadurch gekennzeichnet, dass** die Verbindung eine Telekommunikationsverbindung ist.

29. System nach einem der Ansprüche 26 bis 28, **dadurch gekennzeichnet, dass** das System einen Speicher zum Speichern von Information für den Verbindungsaufbau, insbesondere zum Speichern einer anzurufenden Telefonnummer aufweist.

30. System nach einem der Ansprüche 26 bis 29, **dadurch gekennzeichnet, dass** das System eine Einheit zum Eingeben von Information für den Verbindungsaufbau, insbesondere einer anzurufenden Telefonnummer und/oder zusätzlicher Informationen aufweist.

31. System nach Anspruch 30, **dadurch gekennzeichnet, dass** die Einheit eine Fernbedienung des Dekoders aufweist.

32. System nach Anspruch 30, **dadurch gekennzeichnet, dass** die Einheit ein interaktives Endgerät, insbesondere ein Telefon aufweist.

33. System nach einem der Ansprüche 26 bis 32, **dadurch gekennzeichnet, dass** eine Fehlerdetektiereinheit vorgesehen ist, die erkennt, ob der gespeicherte Entschlüsselungscode einen gewünschten Programminhalt richtig entschlüsselt.

34. System nach einem der Ansprüche 26 bis 33, **dadurch gekennzeichnet, dass** das System eine Einheit zum automatischen Herstellen einer Verbindung und zum Abfragen eines Entschlüsselungscodes zu vorgegebenen Zeitpunkten umfasst.

35. System nach einem der Ansprüche 26 bis 34, **dadurch gekennzeichnet, dass** die Einheit zum Erstellen einer Verbindung, der Speicher zum Speichern des Entschlüsselungscodes, der Speicher zum Speichern von Information für den Verbindungsaufbau, insbesondere einer anzurufenden Telefonnummer, die Eingabeeinheit und/oder die Fehlerdetektiereinheit im Dekoder integriert sind.

36. System nach einem der Ansprüche 26 bis 35, **dadurch gekennzeichnet, dass** der Dekoder einen Quellcode beinhaltet, der zum Decodieren eines verschlüsselten Signals mit dem Entschlüsselungscode kombiniert wird.

37. System nach System nach Anspruch 36, **dadurch gekennzeichnet, dass** der Quellcode des Dekoders auf einem nicht überschreibbaren Speichermedium gespeichert ist.

## Claims

1. A method for transmitting decryption codes for freely transmitted encrypted program contents and for automatically establishing billing data for the program contents, said method comprising the following steps:
a) setting up a connection to a service provider by a customer via the subscriber network of the customer;
b) determining the network terminating units or terminals of the existing connection, in particular identifying the calling party number of the customer and the called number of the service provider;
c) transmitting the decryption code for a program content;
d) establishing billing data using the network terminating unit, in particular the calling party number, the called number of the service provider, and information about the requested program content,
wherein information about the identified calling party number of the customer is integrated in the decryption code.

2. The method according to claim 1, **characterized in that** setting up the connection by the customer is executed by dialing a call number of the service provider and the acceptance of the telephone call by the service provider.

3. The method according to claim 1 or 2, **characterized in that** at least one additional identification feature is retrieved from the caller during the period of the telephone call and before the transmission of the decryption code.

4. The method according to Claim 3, **characterized in that** the validity of the identification features is checked, and the decryption code is transmitted only in the case of the validity thereof.

5. The method according to claim 3 or 4, **characterized in that** the additional identification features include at least one of the following:
an age-related or personal identification code, an identification or device number of a decoder receiving the decryption code.

6. The method according to one of the preceding claims, **characterized in that** the program content for which the decryption code is to be sent is queried before the transmission of the decryption code.

7. The method according to one of the preceding claims, **characterized in that** at least one of the following items of information is stored for the billing data, or forwarded to a corresponding billing unit: the called number, the time and/or duration of the telephone connection, the additional identification features and/or the transmitted decryption code.

8. The method according to one of the preceding claims, **characterized in that** the billing data is forwarded to the telecommunication service provider for collection.

9. The method according to one of the preceding claims, **characterized in that** the called number is a service number, which is billed via the telecommunication service provider.

10. The method according to one of the preceding claims, **characterized in that** the decryption code is generated specifically for an identified decoder of the customer and transmitted thereto.

11. A method for transmitting decryption codes for freely transmitted encrypted program contents to a registered subscriber group, said method comprising the following steps:
a) setting up a connection to a service provider by a customer via the subscriber network of the customer;
b) determining the network terminating units or terminals of the existing connection, in particular identifying the calling party number of the customer and the called number of the service provider;
c) checking whether there is a registered access right to the decryption code for the customer's network terminating unit, in particular the calling party number;
d) transmitting the decryption code if the access right exists,
wherein information about the identified calling party number of the customer is integrated in the decryption code.

12. The method according to claim 11, **characterized in that** the setting up the connection to the customers is executed by dialing a call number of the service provider and the acceptance of the telephone call by the service provider.

13. The method according to claim 11 or 12, **characterized in** besides the network terminating unit or the call number, at least one additional identification feature is retrieved from the caller.

14. The method according to claim 13, **characterized in that** the additional identification feature includes at least one age-related or personal identification code and/or an identification code of a decoder receiving the decryption code.

15. The method according to one of claims 11 to 14, **characterized in that** the program content for which the decryption code is needed is queried for the transmission of the decryption code.

16. The method according to one of claims 11 to 15, **characterized in that** the calling party number and information relating to the program contents for which the decryption code was transmitted are stored and/or forwarded to an appropriate unit for billing purposes.

17. The method according to claim 16, **characterized in that** at least one of the following items of information is stored and/or forwarded for billing purposes: the called number, the time and/or duration of the telephone call, the additional identification features and/or the transmitted decryption code.

18. The method according to one claims 11 to 17, **characterized in that** the decryption code is generated specifically for an identified decoder of the customer and transmitted thereto.

19. An apparatus for transmitting decryption codes for freely transmitted encrypted program contents and for automatic billing of the same, said apparatus comprising:
a unit for establishing a connection between a customer and a service provider over a subscriber network of the customer, in particular a telephone connection between a customer and a service provider;
a unit for determining the network terminating units or terminals of the existing connection between the customer and the service provider, in particular the identification of the calling party number of the customer and the called number of the service provider;
a unit for transmitting the decryption code; and
a unit for storing and/or forwarding billing data, including the network terminating units or terminals, in particular the calling party number of the customer and the called number of the service provider, and information about the program content for which the decryption code was transmitted
wherein information about the identified calling party number of the customer is integrated in the decryption code.

20. The apparatus according to claim 19, wherein the decryption code is generated specifically for an identified decoder of the customer and transmitted thereto.

21. The apparatus according to claim 19 or 20, **characterized in that** a comparator unit is provided for comparing a received item of information with stored information.

22. An apparatus for transmitting decryption codes for freely transmitted encrypted program contents to a registered subscriber group, said apparatus comprising:
a unit for establishing a connection between a customer and a service provider over a subscriber network of the customer, in particular a telephone connection between a customer and a service provider;
a unit for determining the network terminating units or terminals of the existing connection between the customer and the service provider, in particular the identification of the calling party number of a customer and the called number of the service provider;
a memory unit for storing data of a registered subscriber group with its respective network terminating units, in particular its calling numbers;
a unit for comparing the network terminating units, in particular the established calling numbers with the registered data; and
a unit for transmitting the decryption code
wherein information about the identified calling party number of the customer is integrated in the decryption code.

23. The apparatus according to claim 22, **characterized in that** the decryption code is generated specifically for an identified decoder of the customer and transmitted thereto.

24. The apparatus according to claim 22 or 23, **characterized by** a unit for storing and/or forwarding billing data, said billing data including at least the customer's calling party number, the called number of the service provider and information about the program content for which the decryption code was transmitted.

25. The apparatus according to one of claims 22 to 24, **characterized in that** a comparator unit is provided for comparing a received item of information with stored information.

26. A system for decrypting freely transmitted encrypted program contents, the system comprising:
a receiver unit for receiving the encrypted program content;
a unit for establishing a connection between a customer and a decryption code transmission unit of a service provider over a subscriber network of the customer;
a memory for storing a decryption code transmitted over the connection; and
a decoder for decrypting the encrypted program content with the help of the decryption code,
wherein information about the identified calling party number of the customer is integrated in the decryption code.

27. The system according to claim 26, **characterized in that** the decryption code is generated specifically for an identified decoder of the customer.

28. The system according to claim 26 or 27, **characterized in that** the connection is a telecommunication link.

29. The system according to one of claims 26 to 28, **characterized in that** the system comprises a memory for storing information for the connection setup, in particular for storing a telephone number to be called.

30. The system according to one of claims 26 to 29, **characterized in that** the system comprises a unit for input of information for the connection setup, in particular a telephone number to be called and/or additional information.

31. The system according to Claim 30, **characterized in that** the unit comprises a remote control of the decoder.

32. The system according to Claim 30, **characterized in that** the unit comprises an interactive terminal device, in particular a telephone.

33. The system according to one of Claims 26 to 32, **characterized in that** an error detection unit is provided, which detects whether the stored decryption code correctly decodes a desired program content.

34. The system according to one of Claims 26 to 33, **characterized in that** the system includes a unit for automatic setup of a connection and for retrieval of a decryption code at preset times.

35. The system according to one of Claims 26 to 34, **characterized in that** the unit for establishing a connection, the memory for storing the decryption code, the memory for storing information for the connection setup, in particular a telephone number to be called, the input unit and/or the error detection unit are integrated in the decoder.

36. The system according to one of Claims 26 to 35, **characterized in that** the decoder contains a source code, which is combined with the decryption code to decode an encrypted signal.

37. The system according to Claim 36, **characterized in that** the source code of the decoder is stored on a non-overwritable storage medium.

## Revendications

1. Procédé pour transmettre des codes de déchiffrement pour des contenus de programme chiffrés transmis librement et pour établir automatiquement des données de facturation pour les contenus de programme, le procédé comprenant les étapes suivantes :
a) établir par un client une connexion avec un fournisseur de services par l'intermédiaire du réseau d'abonnés du client ;
b) déterminer les unités de terminaison ou les terminaux du réseau de la connexion existante, en particulier identifier le numéro d'appelant du client et le numéro appelé du fournisseur de services ;
c) transmettre le code de déchiffrement pour un contenu de programme ;
d) établir des données de facturation en utilisant l'unité de terminaison du réseau, en particulier le numéro d'appelant, le numéro appelé du fournisseur de services, et des informations au sujet du contenu de programme demandé,
les informations au sujet du numéro d'appelant du client étant intégrées dans le code de déchiffrement.

2. Procédé selon la revendication 1, **caractérisé en ce que** l'établissement de la connexion par le client est exécuté en composant un numéro d'appel du fournisseur de services et par l'acceptation de l'appel téléphonique par le fournisseur de services.

3. Procédé selon la revendication 1 ou 2, **caractérisé en ce qu'**au moins une caractéristique d'identification additionnelle est récupérée auprès de l'appelant pendant la durée de l'appel téléphonique et avant la transmission du code de déchiffrement.

4. Procédé selon la revendication 3, **caractérisé en ce que** la validité des caractéristiques d'identification est vérifiée, et le code de déchiffrement est transmis seulement en cas de validité.

5. Procédé selon la revendication 3 ou 4, **caractérisé en ce que** les caractéristiques d'identification additionnelles comprennent au moins l'un des éléments suivants :
un code d'identification associé à l'âge ou personnel, un numéro d'identification ou de dispositif d'un décodeur recevant le code de déchiffrement.

6. Procédé selon l'une quelconque des revendications précédentes, **caractérisé en ce que** le contenu de programme pour lequel le code de déchiffrement doit être envoyé est demandé avant la transmission du code de déchiffrement.

7. Procédé selon l'une quelconque des revendications précédentes, **caractérisé en ce qu'**au moins l'un des éléments d'informations suivants est mémorisé pour les données de facturation, ou transféré vers une unité de facturation correspondante : le numéro appelé, l'heure et/ou la durée de la connexion téléphonique, les caractéristiques d'identification additionnelles et/ou le code de déchiffrement transmis.

8. Procédé selon l'une quelconque des revendications précédentes, **caractérisé en ce que** les données de facturation sont transférées vers le fournisseur de services de télécommunication dans un but de collecte.

9. Procédé selon l'une quelconque des revendications précédentes, **caractérisé en ce que** le numéro appelé est un numéro de service, qui est facturé par l'intermédiaire du fournisseur de services de télécommunication.

10. Procédé selon l'une quelconque des revendications précédentes, **caractérisé en ce que** le code de déchiffrement est généré de façon spécifique pour un décodeur identifié du client et lui est transmis.

11. Procédé pour transmettre des codes de déchiffrement pour des contenus de programme chiffrés transmis librement à un groupe d'abonnés enregistrés, le procédé comprenant les étapes suivantes :
a) établir par un client une connexion avec un fournisseur de services par l'intermédiaire du réseau d'abonnés du client ;
b) déterminer les unités de terminaison ou les terminaux du réseau de la connexion existante, en particulier identifier le numéro d'appelant du client et le numéro appelé du fournisseur de services ;
c) vérifier s'il y a un droit d'accès enregistré pour le code de déchiffrement pour l'unité de terminaison de réseau du client, en particulier le numéro d'appelant ;
d) transmettre le code de déchiffrement si le droit d'accès existe,
les informations au sujet du numéro d'appelant identifié du client étant intégrées dans le code de déchiffrement.

12. Procédé selon la revendication 11, **caractérisé en ce que** l'établissement de la connexion avec les clients est exécuté en composant un numéro d'appel du fournisseur de services et par l'acceptation de l'appel téléphonique par le fournisseur de services.

13. Procédé selon la revendication 11 ou 12, **caractérisé en ce qu'**en plus de l'unité de terminaison de réseau ou du numéro d'appel, au moins une caractéristique d'identification additionnelle est récupérée auprès de l'appelant.

14. Procédé selon la revendication 13, **caractérisé en ce que** la caractéristique d'identification additionnelle comprend au moins un code d'identification lié à l'âge ou personnel et/ou un code d'identification d'un décodeur recevant le code de déchiffrement.

15. Procédé selon l'une quelconque des revendications 11 à 14, **caractérisé en ce que** le contenu du programme pour lequel le code de déchiffrement est nécessaire est demandé pour la transmission du code de déchiffrement.

16. Procédé selon l'une quelconque des revendications 11 à 15, **caractérisé en ce que** le numéro de l'appelant et les informations concernant les contenus de programme pour lesquels le code de déchiffrement a été transmis sont mémorisés et/ou transférés vers une unité appropriée dans un but de facturation.

17. Procédé selon la revendication 16, **caractérisé en ce qu'**au moins un des éléments d'informations suivant est mémorisé et/ou transféré dans un but de facturation : le numéro appelé, l'heure et/ou la durée de l'appel téléphonique, les caractéristiques d'identification additionnelles et/ou le code de déchiffrement transmis.

18. Procédé selon l'une quelconque des revendications 11 à 17, **caractérisé en ce que** le code de déchiffrement est généré spécifiquement pour un décodeur identifié du client et lui est transmis.

19. Dispositif pour transmettre des codes de déchiffrement pour des contenus de programme chiffrés transmis librement et pour leur facturation automatique, le dispositif comprenant :
une unité pour établir une connexion entre un client et un fournisseur de services sur un réseau d'abonnés du client, en particulier une connexion téléphonique entre un client et un fournisseur de services ;
une unité pour déterminer les unités de terminaison ou les terminaux du réseau de la connexion existante entre le client et le fournisseur de services, en particulier l'identification du numéro d'appelant du client et du numéro appelé du fournisseur de services ;
une unité pour transmettre le code de déchiffrement ; et
une unité pour mémoriser et/ou transférer des données de facturation, comprenant les unités de terminaison ou les terminaux du réseau, en particulier le numéro d'appelant du client et le numéro appelé du fournisseur de services, et des informations au sujet du contenu de programme pour lequel le code de déchiffrement a été transmis,
les informations au sujet du numéro d'appelant identifié du client étant intégrées dans le code de déchiffrement.

20. Dispositif selon la revendication 19, dans lequel le code de déchiffrement est généré spécifiquement pour un décodeur identifié du client et lui est transmis.

21. Dispositif selon la revendication 19 ou 20, **caractérisé en ce qu'**une unité de comparaison est prévue pour comparer un élément d'informations reçu à des informations mémorisées.

22. Dispositif pour transmettre des codes de déchiffrement pour des contenus de programme chiffrés transmis librement à un groupe d'abonnés enregistrés, le dispositif comprenant :
une unité pour établir une connexion entre un client et un fournisseur de services sur un réseau d'abonnés du client, en particulier une connexion téléphonique entre un client et un fournisseur de services ;
une unité pour déterminer les unités de terminaisons ou les terminaux du réseau de la connexion existante entre le client et le fournisseur de services, en particulier l'identification du numéro d'appelant du client et du numéro appelé du fournisseur de services ;
une unité mémoire pour mémoriser des données d'un groupe d'abonnés enregistrés avec ses unités de terminaison réseau respectives, en particulier ses numéros d'appelants ;
une unité pour comparer les unités de terminaisons réseau, en particulier les numéros d'appelants établis, à des données enregistrées ; et
une unité pour transmettre le code de déchiffrement ;
les informations au sujet du numéro d'appelant identifié du client étant intégrées dans le code de déchiffrement.

23. Dispositif selon la revendication 22, **caractérisé en ce que** le code de déchiffrement est généré spécifiquement pour un décodeur identifié du client et lui est transmis.

24. Dispositif selon la revendication 22 ou 23, **caractérisé par** une unité pour mémoriser et/ou transférer des données de facturation, les données de facturation comprenant au moins le numéro d'appelant du client, le numéro appelé du fournisseur de services et des informations au sujet du contenu de programme pour lequel le code de déchiffrement a été transmis.

25. Dispositif selon l'une quelconque des revendications 22 à 24, **caractérisé en ce qu'**une unité de comparaison est prévue pour comparer un élément d'information reçu à des informations mémorisées.

26. Système pour déchiffrer des contenus de programme chiffrés transmis librement, le système comprenant :
une unité de réception pour recevoir le contenu de programme chiffré ;
une unité pour établir une connexion entre un client et une unité de transmission de code de déchiffrement d'un fournisseur de services sur un réseau d'abonnés du client ;
une mémoire pour mémoriser un code de déchiffrement transmis sur la connexion ; et
un décodeur pour déchiffrer le contenu de programme chiffré à l'aide du code de déchiffrement, les informations au sujet du numéro d'appelant identifié du client étant intégrées dans le code de déchiffrement.

27. Système selon la revendication 26, **caractérisé en ce que** le code de déchiffrement est généré spécifiquement pour un décodeur identifié du client.

28. Système selon la revendication 26 ou 27, **caractérisé en ce que** la connexion est une liaison de télécommunication.

29. Système selon l'une quelconque des revendications 26 à 28, **caractérisé en ce que** le système comprend une mémoire pour mémoriser des informations pour l'établissement de la connexion, en particulier pour mémoriser un numéro de téléphone à appeler.

30. Système selon l'une quelconque des revendications 26 à 29, **caractérisé en ce que** le système comprend une unité pour introduire des informations pour l'établissement de la connexion, en particulier un numéro de téléphone à appeler et/ou des informations additionnelles.

31. Système selon la revendication 30, **caractérisé en ce que** ladite unité comprend une commande à distance du décodeur.

32. Système selon la revendication 30, **caractérisé en ce que** l'unité comprend un dispositif terminal interactif, en particulier un téléphone.

33. Système selon l'une quelconque des revendications 26 à 32, **caractérisé en ce qu'**une unité de détection d'erreur est prévue, celle-ci détectant si le code de déchiffrement mémorisé décode correctement un contenu de programme souhaité.

34. Système selon l'une quelconque des revendications 26 à 33, **caractérisé en ce que** le système comprend une unité pour établir automatiquement une connexion et pour récupérer un code de déchiffrement à des instants prédéterminés.

35. Système selon l'une quelconque des revendications 26 à 34, **caractérisé en ce que** l'unité pour établir une connexion, la mémoire pour mémoriser le code de déchiffrement, la mémoire pour mémoriser des informations pour l'établissement de la connexion, en particulier un numéro de téléphone à appeler, l'unité d'introduction et/ou l'unité de détection d'erreur sont intégrées dans le décodeur.

36. Système selon l'une quelconque des revendications 26 à 35, **caractérisé en ce que** le décodeur contient un code source, qui est combiné avec le code de déchiffrement pour décoder un signal chiffré.

37. Système selon la revendication 36, **caractérisé en ce que** le code source du décodeur est mémorisé sur un support de stockage non-réinscriptible.
